# EUROPÄISCHE PATENTSCHRIFT

(11) **EP 2 369 203 B1**
(45) Veröffentlichungstag und Bekanntmachung des Hinweises auf die Patenterteilung: **01.01.2014**
(21) Anmeldenummer: 11154268.4
(22) Anmeldetag: 14.02.2011
(51) Int. Cl.: B60K 17/28, B60W 10/30, B60W 30/188, F16H 61/04

(54) **Verfahren zum Betreiben eines Antriebsstrangs**
Method for operating a drive train
Procédé pour faire fonctionner une chaîne cinématique

(30) Priorität: 10.03.2010 DE 102010002725
(43) Veröffentlichungstag der Anmeldung: 28.09.2011
(73) Patentinhaber: ZF Friedrichshafen AG, 88038 Friedrichshafen (DE)
(72) Erfinder: Schneider, Florian, 88161, Lindenberg (DE); Mair, Roland, 88069, Tettnang (DE)

(56) Entgegenhaltungen:
- DE-A1-102005 048 893
- US-A- 5 489 247
- US-A1- 2006 116 238

## Beschreibung

Die Erfindung betrifft ein Verfahren zum Betreiben eines Antriebsstrangs, der zumindest ein Antriebsaggregat und ein automatisiertes Schaltgetriebe aufweist.

Als Gruppengetriebe ausgebildete, automatisierte Schaltgetriebe mit einem mehrstufigen Hauptgetriebe und einer dem Hauptgetriebe vor- oder nachgeschalteten Bereichsgruppe sowie mit einer dem Hauptgetriebe vor- oder nachgeschalteten Splitgruppe sind seit längerem bekannt und kommen bevorzugt in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt.

Es sind auch automatisierte Schaltgetriebe bekannt, die ausschließlich ein Hauptgetriebe aufweisen. Die Splitgruppe und die Bereichsgruppe sind demnach optionale Baugruppen eines automatisierten Schaltgetriebes, wobei dem Hauptgetriebe eine Bereichsgruppe vor- oder nachgeschaltet und/oder eine Splitgruppe vor- oder nachgeschaltet sein kann. Automatisierte Schaltgetriebe, die formschlüssig arbeitende Schaltelemente aufweisen, sind von automatischen Lastschaltgetrieben mit reibschlüssig arbeitenden Schaltelementen zu unterscheiden.

Weiterhin ist es bereits bekannt, dass ein solcher Antriebsstrang eines Kraftfahrzeugs mit einem automatisierten Schaltgetriebe einen Nebenabtrieb umfassen kann, wobei ein Nebenabtrieb auch als Power Take Off (PTO) bezeichnet wird. Bei Nebenabtrieben wird einerseits zwischen getriebeseitigen und motorseitigen Nebenabtrieben und andererseits zwischen stationären und instationären Nebenabtrieben unterschieden.

Ein motorseitiger Nebenabtrieb zweigt unmittelbar vom Antriebsaggregat ein Moment ab, wohingegen ein getriebeseitiger Nebenabtrieb vom Getriebe ein Moment abzweigt. Stationäre Nebenabtriebe dürfen nur bei stillstehendem Kraftfahrzeug betrieben werden, nämlich dann, wenn das automatisierte Schaltgetriebe eine Neutralstellung einnimmt, also einen Kraftfluss bzw. Momentfluss vom Antriebsaggregat zum Achsantrieb hin unterbrochen ist. Instationäre Nebenabtriebe dürfen hingegen auch dann betrieben werden, wenn im Getriebe ein Gang eingelegt ist, wenn also der Kraftfluss bzw. Momentfluss vom Antriebsaggregat zum Achsantrieb nicht unterbrochen ist.

Ein instationärer, getriebeseitiger Nebenabtrieb eines solchen Antriebsstrangs eines Kraftfahrzeugs mit einem automatisierten Schaltgetriebe kann bislang nur bei stehendem Kraftfahrzeug eingelegt und damit aktiviert werden. Des Weiteren wird bislang dann, wenn ein getriebeseitiger, instationärer Nebenabtrieb eingelegt bzw. aktiviert ist, die Ausführung von Schaltungen verhindert, sodass ein Fahren bei eingelegtem bzw. aktiviertem Nebenabtrieb nur in einem einzigen Gang und damit in einem eingeschränkten Geschwindigkeitsbereich möglich ist. Dabei muss es sich dann zwangsläufig, da nach dem Stand der Technik das Einlegen bzw. Aktivieren eines getriebeseitigen, instationären Nebenabtriebs nur bei stehendem Fahrzeug erlaubt ist, um einen relativ kleinen Gang, nämlich einen Anfahrgang, handeln, da das Anfahren aus dem Stillstand heraus möglich sein muss.

Die hier vorliegende Erfindung betrifft nun ein Verfahren zum Betreiben eines Antriebsstrangs mit einem automatisierten Schaltgetriebe und einem getriebeseitigen, instationärem Nebenabtrieb, bei welchem bei eingelegtem und damit aktiviertem getriebeseitigen, instationären Nebenabtrieb die Ausführung von Schaltungen und damit Gangwechseln möglich ist.

Aus der DE 10 2005 048 893 A1 ist bereits ein Verfahren zum Betreiben eines Antriebsstrangs mit einem automatisierten Schaltgetriebe und einem Nebenabtrieb bekannt, bei welchem bei zugeschaltetem und damit eingelegtem Nebenabtrieb eine Schaltung und damit ein Gangwechsel ausgeführt werden kann, wobei eine notwendige Synchronisation einer Eingangswelle des automatisierten Schaltgetriebes zwingend mittels des Antriebsaggregats über die Trennkupplung durchgeführt wird.

Ein Verfahren gemäß dem Oberbegriff des Anspruchs 1 ist aus der US2006/0116238 A bekannt.

Hiervon ausgehend liegt der vorliegenden Erfindung das Problem zu Grunde, ein neuartiges Verfahren zum Betreiben eines Antriebsstrangs eines Kraftfahrzeugs zu schaffen. Dieses Problem wird durch ein Verfahren gemäß Anspruch 1 gelöst. Erfindungsgemäß wird zur Ausführung einer Schaltung im automatisierten Schaltgetriebe bei aktiviertem bzw. eingelegtem, getriebeseitigen, instationären Nebenabtrieb eine bei Ausführung der Schaltung abzufangende Belastung ermittelt, wobei abhängig von der ermittelten Belastung bestimmt wird, ob und unter Verwendung welcher Synchronelemente des Antriebstrangs die Schaltung ausgeführt wird.

Mit der hier vorliegenden Erfindung wird erstmals vorgeschlagen, die Ausführung einer Schaltung im automatisierten Schaltgetriebe bei aktiviertem bzw. eingelegtem, getriebeseitigen, instationären Nebenabtrieb abhängig von der bei Ausführung der Schaltung abzufangenden Belastung zu gestalten. Erfindungsgemäß wird abhängig von der bei Ausführung der Schaltung abzufangenden Belastung bestimmt, ob und unter Verwendung welcher Synchronelemente des Antriebsstrangs die Schaltung ausgeführt wird.

Nach einer vorteilhaften Weiterbildung der Erfindung wird dann, wenn die bei Ausführung der Schaltung abzufangende Belastung von einer Getriebebremse des automatisierten Schaltgetriebes abfangen werden kann, als Synchronelement zur Ausführung der Schaltung zumindest die Getriebebremse verwendet wird.

Dann hingegen, wenn die bei Ausführung der Schaltung abzufangende Belastung von einer Getriebebremse des automatisierten Schaltgetriebes nicht abfangen werden kann, wird als Synchronelement zur Ausführung der Schaltung zumindest das Antriebsaggregat und gegebenenfalls die Trennkupplung verwendet.

Kann hingegen die bei Ausführung der Schaltung abzufangende Belastung weder von einer Getriebebremse des automatisierten Schaltgetriebes noch vom Antriebsaggregat und gegebenenfalls der Trennkupplung abfangen werden, so wird die Ausführung der Schaltung nicht zugelassen.

Die bei Ausführung der Schaltung abzufangende Belastung wird vorzugsweise abhängig von der Belastung durch den aktivierten bzw. eingelegten, getriebeseitigen, instationären Nebenabtrieb sowie abhängig von der Fahrsituation und/oder abhängig vom Fahrerwunsch ermittelt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein allgemeines Schema eines Antriebsstrangs, bei welchem das erfindungsgemäße Verfahren einsetzbar ist;
- Fig. 2: einen Sonderfall des Antriebsstrangs der Fig. 1, bei welchem das erfindungsgemäße Verfahren einsetzbar ist;

- Fig. 3: den Antriebsstrang der Fig. 2 in größerem Detail;
- Fig. 4: einen weiteren Antriebsstrang, bei welchem das erfindungsgemäße Verfahren einsetzbar ist; und
- Fig. 5: einen weiteren Antriebsstrang, bei welchem das erfindungsgemäße Verfahren einsetzbar ist.

Die hier vorliegende Erfindung betrifft ein Verfahren zum Betreiben eines Antriebsstrangs mit einem automatisierten Schaltgetriebe und einem getriebeseitigen, instationären Nebenabtrieb.

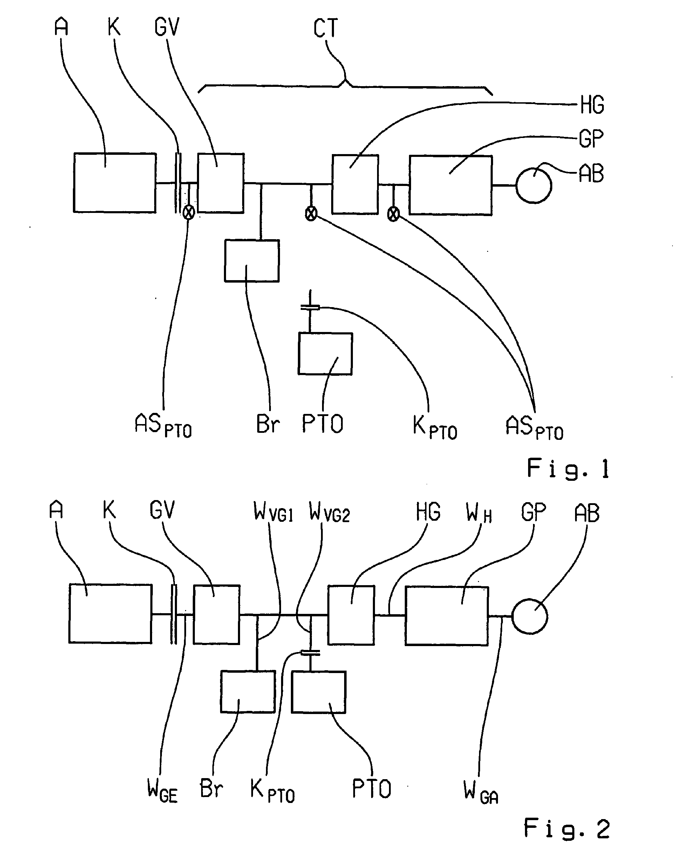

Fig. 1 zeigt stark schematisiert ein Antriebsstrangschema, bei welchem das erfindungsgemäße Verfahren einsetzbar ist, wobei in Fig. 1 ein Antriebsaggregat A und ein Achsantrieb AB mit einem zwischen das Antriebsaggregat A und den Achsantrieb AB geschalteten, als Gruppengetriebe CT ausgebildeten, automatisierten Schaltgetriebe gezeigt sind.

Das in Fig. 1 als Gruppengetriebe CT ausgeführte, automatisierte Schaltgetriebe verfügt gemäß Fig. 1 über ein Hauptgetriebe HG, über eine dem Hauptgetriebe HG antriebstechnisch vorgeschaltete Vorschaltgruppe bzw. Splitgruppe GV und eine dem Hauptgetriebe AG antriebstechnisch nachgeschaltete Nachschaltgruppe bzw. Bereichsgruppe GP. Zwischen das Antriebsaggregat A und das Gruppengetriebe CT ist eine Trennkupplung bzw. Anfahrkupplung K geschaltet, über die das Antriebsaggregat A vom Gruppengetriebe CT abgekoppelt werden kann. Weiterhin zeigt Fig. 1 eine steuerbare Getriebebremse Br sowie einen getriebeseitigen Nebenabtrieb PTO, dem eine Kupplung K_{PTO} zugeordnet ist, wobei der getriebeseitige Nebenabtrieb PTO als instationärer Nebenabtrieb ausgebildet ist und an unterschiedliche Anbindungsstellen AS_{PTO} des Gruppengetriebes CT angekoppelt werden kann. Die Anbindungsstellen AS_{PTO} sind Wellen des Gruppengetriebes CT zugeordnet.

Im Sonderfall der Fig. 2 ist der getriebeseitige, instationäre Nebenabtriebe PTO an eine der in Fig. 1 gezeigten Anbindungsstellen AS_{PTO} für den Nebenabtrieb angekoppelt, nämlich an eine Anbindungsstelle, die antriebstechnisch zwischen der Splitgruppe GV und dem Hauptgetriebe AG liegt.

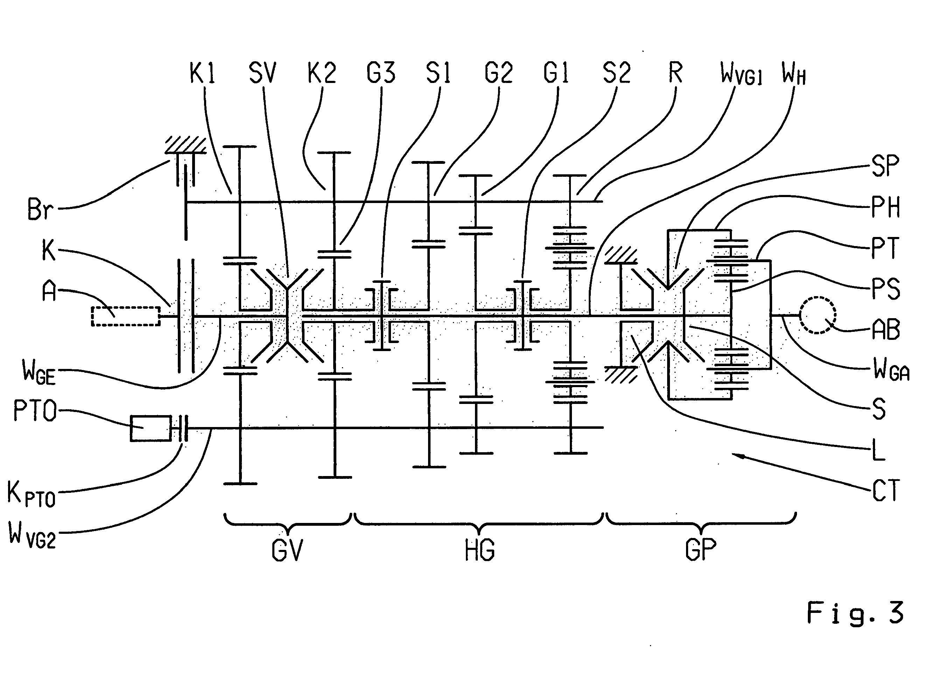

Fig. 3 zeigt den Antriebsstrang der Fig. 2 in größerem Detail, wobei es sich bei dem in Fig. 3 konkret gezeigten Gruppengetriebe CT um ein von der Anmelderin stammendes Gruppengetriebe der sogenannten AS-Tronic-Familie handelt.

Das Hauptgetriebe HG des Gruppengetriebes CT der Fig. 3 ist als Direktganggetriebe in Vorgelegebauweise ausgeführt und weist eine Hauptwelle W_{H} und zwei Vorgelegewellen W_{VG1} und W_{VG2} auf, wobei die erste Vorgelegewelle W_{VG1} mit der steuerbaren Getriebebremse Br versehen ist und wobei der getriebeseitige, instationäre Nebenabtrieb PTO an die zweite Vorgelegewelle W_{VG1} ankoppelbar bzw. von derselben abkoppelbar ist.

Das Hauptgetriebe HG der Fig. 3 ist mit drei Übersetzungsstufen G1, G2 und G3 für eine Vorwärtsfahrt und einer Übersetzungsstufe R für eine Rückwärtsfahrt dreistufig ausgebildet. Losräder der Übersetzungsstufen G1, G2 und R sind jeweils drehbar auf der Hauptwelle W_{H} gelagert und über zugeordnete Klauenkupplungen schaltbar. Die zugeordneten Festräder sind drehfest auf den Vorgelegewellen W_{VG1} und W_{VG2} angeordnet. Die als Direktgang ausgebildete höchste Übersetzungsstufe G3 des Hauptgetriebes HG ist über eine Direktschaltkupplung schaltbar. Die Schaltkupplungen der Übersetzungsstufen G3 und G2 sowie die Schaltkupplungen der Übersetzungsstufen G1 und R sind jeweils als Klauenkupplungen ausgebildet und in einem gemeinsamen Schaltpaket S1 bzw. S2 zusammengefasst. Das Hauptgetriebe HG ist unsynchronisiert schaltbar.

Die Vorschaltgruppe bzw. Splitgruppe GV des Gruppengetriebes CT der Fig. 3 ist zweistufig ausgebildet und ebenfalls in Vorgelegebauweise ausgeführt, wobei die beiden Übersetzungsstufen K1 und K2 der Vorschaltgruppe GV zwei schaltbare Eingangskonstanten des Hauptgetriebes HG bilden. Durch eine geringere Übersetzungsdifferenz der beiden Übersetzungsstufen K1, K2 ist die Vorschaltgruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem gestrichelt gezeichneten, als Verbrennungsmotor ausgebildeten und nicht zum Gruppengetriebe gehörenden Antriebsaggregat A in Verbindung steht. Das Losrad der zweiten Übersetzungsstufe K2 ist drehbar auf der Hauptwelle W_{H} gelagert. Die Festräder beider Übersetzungsstufen K1, K2 der Vorschaltgruppe GV sind jeweils drehfest mit den eingangsseitig verlängerten Vorgelegewellen W_{VG1} und W_{VG2} des Hauptgetriebes angeordnet. Die synchronisierten und als Klauenkupplungen ausgebildeten Schaltkupplungen der Vorschaltgruppe GV sind in einem gemeinsamen Schaltpaket SV zusammengefasst.

Die dem Hauptgetriebe HG nachgeordnete Bereichsgruppe GP des Gruppengetriebes CT der Fig. 3 ist ebenfalls zweistufig ausgebildet, jedoch in Planetenbauweise mit einem einfachen Planetenradsatz. Das Sonnenrad PS ist drehfest mit der ausgangsseitig verlängerten Hauptwelle W_{H} des Hauptgetriebes HG verbunden. Der Planetenträger PT ist drehfest mit der AusgangsWelle W_{GA} des Gruppengetriebes CT gekoppelt, die mit einem gestrichelt gezeichneten Achsantrieb AB in Verbindung steht. Das Hohlrad PH steht mit einem Schaltpaket SP mit zwei synchronisierten, als Klauenkupplungen ausgebildeten Schaltkupplungen in Verbindung, durch welche die Bereichsgruppe GP wechselweise durch die Verbindung des Hohlrads PH mit einem feststehenden Gehäuseteil in eine Langsamfahrstufe L und durch die Verbindung des Hohlrads PH mit der Hauptwelle W_{H} bzw. dem Sonnenrad PS in eine Schnellfahrstufe S schaltbar ist. Die Bereichsgruppe GP ist synchronisiert schaltbar.

Die hier vorliegende Erfindung betrifft nun solche Details, mithilfe derer bei einem Antriebsstrang mit einem automatisierten Schaltgetriebe und einem getriebeseitigen, instationären Nebenabtrieb PTO die Ausführung von Schaltungen des automatisierten Schaltgetriebes bei aktiviertem bzw. eingelegtem, getriebeseitigen, instationären Nebenabtrieb effizient möglich ist.

Bereits an dieser Stelle soll darauf hingewiesen werden, dass das erfindungsgemäße Verfahren dabei nicht auf die Anwendungsfälle der in Fig. 1 bis 3 gezeigten Antriebsstränge beschränkt ist, sondern auch bei anderen Antriebsstrangkonfigurationen mit einem automatisierten Schaltgetriebe und einem getriebeseitigen, instationären Nebenabtrieb zum Einsatz kommen kann.

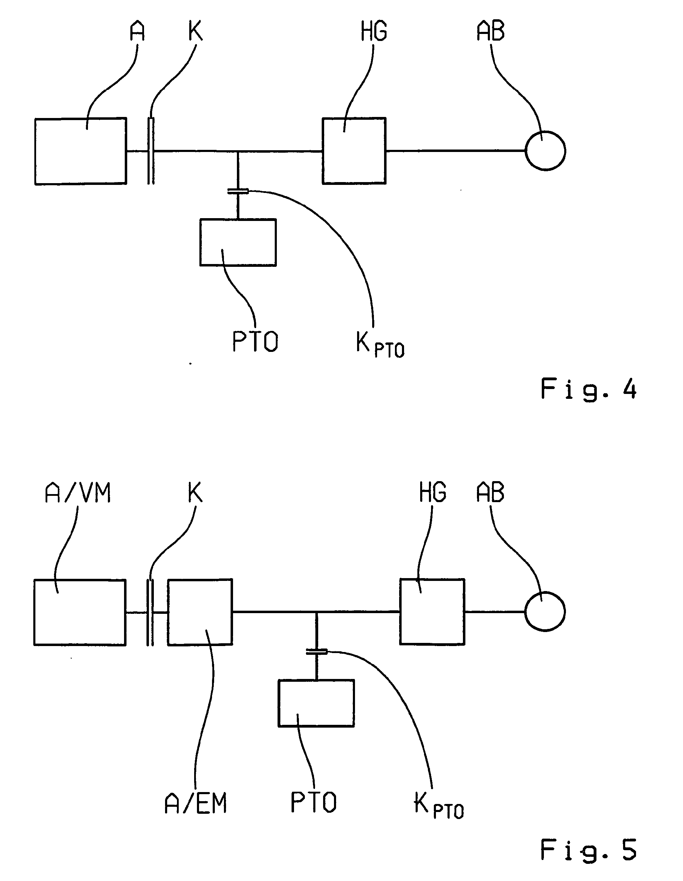

So kann die Erfindung auch beim Antriebsstrang der Fig. 4, bei welchem das automatisierte Schaltgetriebe ausschließlich ein Hauptgetriebe HG, jedoch weder eine Splitgruppe GV noch eine Bereichsgruppe GP umfasst, zum Einsatz kommen. Ferner kann das erfindungsgemäße Verfahren auch beim Antriebsstrang der Fig. 5 zum Einsatz kommen, bei welchem das automatisierte Schaltgetriebe in Übereinstimmung zur Fig. 4 wiederum ausschließlich ein Hauptgetriebe HG umfasst, bei welchem das Antriebsaggregat A jedoch als Hybridantrieb ausgebildet ist, der zusätzlich zu einem Verbrennungsmotor VM eine elektrische Maschine EM umfasst, die gemäß Fig. 5 antriebstechnisch der Anfahrkupplung K nachgeschaltet ist.

Zur Ausführung einer Schaltung im automatisierten Schaltgetriebe bei den in Fig. 1 bis 5 gezeigten Antriebssträngen mit aktiviertem bzw. eingelegtem, getriebeseitigen, instationären Nebenabtrieb wird so vorgegangen, dass eine bei Ausführung der Schaltung abzufangende Belastung, also abzufangende Kräfte und Momente, ermittelt wird bzw. werden, und dass abhängig von der ermittelten Belastung bestimmt wird, ob und unter Verwendung welcher Synchronelemente des Antriebsstrangs die Schaltung ausgeführt wird.

Dann, wenn die bei Ausführung der Schaltung abzufangende Belastung von der Getriebebremse Br des automatisierten Schaltgetriebes abgefangen werden kann, wird als Synchronelement zur Ausführung der Schaltung bei eingelegtem, getriebeseitigem, instationärem Nebenabtrieb die Getriebebremse Br verwendet. Die Ausführung von Schaltungen unter Verwendung der Getriebebremse bei nicht eingelegtem Nebenabtrieb PTO ist dem hier angesprochenen Fachmann geläufig und bedarf daher keiner näheren Erläuterung. Die Ausführung von Schaltungen unter Verwendung der Getriebebremse bei eingelegtem Nebenabtrieb PTO erfolg analog.

Dann hingegen, wenn die bei Ausführung der Schaltung abzufangende Belastung von der Getriebebremse Br nicht abgefangen werden kann oder wenn, wie in Fig. 4 und 5 der Fall, keine Getriebebremse Br vorhanden ist, wird als Synchronelement zur Ausführung der Schaltung zumindest das Antriebsaggregat A und gegebenenfalls die Trennkupplung K verwendet.

Dann hingegen, wenn die bei Ausführung der Schaltung abzufangende Belastung weder von der Getriebebremse Br noch vom Antriebsaggregat A und gegebenenfalls der Trennkupplung K abgefangen werden, so wird die Ausführung der Schaltung nicht zugelassen.

Die bei Ausführung der Schaltung abzufangende Belastung wird abhängig von der Belastung durch den aktivierten bzw. eingelegten, getriebeseitigen, instationären Nebenabtrieb PTO sowie abhängig von einer Fahrsituation und/oder abhängig von einem Fahrerwunsch ermittelt.

Der Fahrerwunsch ist dabei abhängig von einer Fahrpedalbetätigung, aus welcher eine gewünschte Schaltgeschwindigkeit und ein gewünschter Schaltkomfort abgeleitet werden kann.

Bei einer zu berücksichtigenden Fahrsituation kann es sich zum Beispiel um die Neigung einer Fahrbahn des Kraftfahrzeugs handeln, auf welcher das Kraftfahrzeug betrieben wird, wobei dann vorgesehen sein kann, die Ausführung einer Schaltung im automatisierten Schaltgetriebe bei aktiviertem, getriebeseitigem, instationärem Nebenabtrieb PTO nur dann zuzulassen, wenn die Neigung der Fahrbahn kleiner als ein applizierbarer Grenzwert ist.

Dann, wenn aufgrund der ermittelten Belastung, die bei Ausführung der Schaltung abzufangen ist, die Schaltung unter Verwendung des Antriebsaggregats A und gegebenenfalls unter Verwendung der Trennkupplung K ausgeführt wird, und wenn, wie in den Ausführungsbeispielen der Fig. 1 bis 4 gezeigt, das Antriebsaggregat A als Verbrennungsmotor ausgebildet ist, der über die Trennkupplung K an die Eingangswelle des automatisierten Schaltgetriebes gekoppelt ist, erfolgt die Ausführung der Schaltung im automatisierten Schaltgetriebe unter Verwendung des als Verbrennungsmotor ausgebildeten Antriebsaggregats A und unter Verwendung der Trennkupplung K derart, dass zunächst das automatisierte Schaltgetriebe in eine Neutralposition überführt und die Trennkupplung K geöffnet wird.

Vorzugsweise wird dabei das automatisierte Schaltgetriebe in den Ausführungsbeispielen der Fig. 1 bis 4 dadurch in eine Neutralposition überführt, dass das Hauptgetriebe HG in die Neutralposition überführt wird.

Anschließend hieran wird in Neutralposition des Getriebes das als Verbrennungsmotor ausgebildete Antriebsaggregat A auf eine Zieldrehzahl eines Zielgangs bzw. Sollgangs der auszuführenden Schaltung gebracht und hierbei gleichzeitig über ein schlupfendes Schließen der Trennkupplung K der Synchronlauf des Zielgangs im automatisierten Schaltgetriebe hergestellt. Hierbei wird die Trennkupplung K belastet.

Alternativ hierzu ist es möglich, die Ausführung der Schaltung unter Verwendung des als Verbrennungsmotor ausgebildeten Antriebsaggregats A sowie unter Verwendung der Trennkupplung K als Synchronelemente derart auszuführen, dass zunächst das automatisierte Schaltgetriebe, insbesondere das Hauptgetriebe HG desselben, in eine Neutralposition überführt und die Trennkupplung K geöffnet wird, wobei anschließend in Neutralposition des automatisierten Schaltgetriebes bei geöffneter Trennkupplung K das Antriebsaggregat A auf die aktuelle Drehzahl der Eingangswelle des automatisierten Schaltgetriebes gebracht wird, und dass erst darauffolgend die Trennkupplung K schlupffrei geschlossen wird. Anschließend wird dann das Antriebsaggregat A bzw. der Verbrennungsmotor auf eine Zieldrehzahl des Zielgangs der Schaltung für den Synchronlauf des Zielgangs im automatisierten Schaltgetriebe gebracht.

Dieser Ablauf verfügt über den Vorteil, dass die Trennkupplung K weitestgehend geschont wird.

Dann, wenn wie im Antriebsstrang der Fig. 5 gezeigt, das Antriebsaggregat A als Hybridantrieb ausgebildet ist, welches einen Verbrennungsmotor VM und eine elektrische Maschine EM umfasst, so kann eine Schaltung unter Verwendung des Antriebsaggregats A auch derart ausgeführt werden, dass zunächst das automatisierte Schaltgetriebe in eine Neutralposition überführt und die Trennkupplung K geöffnet wird, wobei anschließend in Neutralposition des Getriebes bei geöffneter Trennkupplung K über die elektrische Maschine EM der Synchronlauf des Zielgangs im automatisierten Schaltgetriebe erreicht wird, indem die elektrische Maschine EM auf die Zieldrehzahl des Zielgangs der Schaltung gebracht wird.

In diesem Fall erfolgt demnach die Synchronisation unter Verwendung der elektrischen Maschine EM des als Hybridantriebs ausgebildeten Antriebsaggregats A.

Mit der hier vorliegenden Erfindung ist es demnach möglich, abhängig von der Ausführung des Antriebsaggregats A sowie abhängig von der Ausführung des automatisierten Schaltgetriebes sowie abhängig von der bei Ausführung einer Schaltung abzufangenden Belastung, die von der Last des getriebeseitigen, instationären Nebenabtriebs PTO abhängig ist, zur Ausführung einer Schaltung geeignete Synchronelemente des Antriebsstrangs auszuwählen.

Ist eine Getriebesynchronisierung über die Getriebebremse nicht geeignet, bei eingelegtem, getriebeseitigem, instationärem Nebenabtrieb PTO eine Synchronisation für einen Gangwechsel auszuführen, so erfolgt die Synchronisation über das Antriebsaggregat A und gegebenenfalls die Trennkupplung K. Dann, wenn auch Antriebsaggregat A und Trennkupplung K eine während der Ausführung einer Schaltung aufzunehmende Belastung nicht abfangen können, wird Ausführung der Schaltung unterdrückt.

Vorzugsweise wird hierbei einem Fahrer angezeigt, ob eine Schaltung bei eingelegtem, instationären, getriebeseitigen Nebenabtrieb PTO ausgeführt werden kann oder nicht, um so für den Fahrer ein nachvollziehbares Verhalten des Antriebsstrangs zu gewährleisten.

### Bezugszeichen

- Br: Getriebebremse
- CT: Gruppengetriebe
- G1: Übersetzungsstufe Vorwärtsfahrt
- G2: Übersetzungsstufe Vorwärtsfahrt
- G3: Übersetzungsstufe Vorwärtsfahrt
- GV: Splitgruppe
- GP: Bereichsgruppe
- HG: Hauptgetriebe
- K: Trennkupplung
- K1: Übersetzungsstufe
- K2: Übersetzungsstufe
- L: Langsamfahrstufe
- PS: Sonnenrad
- PT: Planetenträger
- PTO: Nebenabtrieb
- K_{PTO}: Kupplung Nebenabtrieb
- AS_{PTO}: Anbindungsstelle Nebenabtrieb
- PH: Hohlrad
- R: Übersetzungsstufe Rückwärtsfahrt
- S: Schnellfahrstufe
- S1: Schaltpaket
- S2: Schaltpaket
- SP: Schaltpaket
- SV: Schaltpaket
- W_{GA}: Ausgangswelle
- W_{GE}: Eingangswelle
- W_{H}: Hauptwelle
- W_{VG1}: Vorgelegewelle
- W_{VG2}: Vorgelegewelle

- A: Antriebsaggregat
- AB: Achsantrieb
- VM: Verbrennungsmotor
- EM: elektrische Maschine

## Patentansprüche

1. Verfahren zum Betreiben eines Antriebsstrangs eines Kraftfahrzeugs, wobei der Antriebsstrang ein zwischen einem Antriebsaggregat sowie einem Achsantrieb angeordnetes automatisiertes Schaltgetriebe aufweist, wobei eine Eingangswelle des automatisierten Schaltgetriebes über eine steuerbare Trennkupplung mit dem Antriebsaggregat und eine Ausgangswelle des automatisierten Schaltgetriebes mit dem Achsantrieb in Verbindung steht, und wobei der Antriebsstrang weiterhin einen getriebeseitigen, instationären Nebenabtrieb umfasst, der zum Aktivieren bzw. Einlegen an eine getriebeseitige Anbindungsstelle ankoppelbar und zum Deaktivieren bzw. Auslegen von derselben abkoppelbar ist, wobei zur Ausführung einer Schaltung im automatisierten Schaltgetriebe bei aktiviertem bzw. eingelegtem, getriebeseitigen, instationären Nebenabtrieb eine bei Ausführung der Schaltung abzufangende Belastung ermittelt wird, **dadurch gekennzeichnet, dass** abhängig von der ermittelten Belastung bestimmt wird, ob und unter Verwendung welcher Synchronelemente des Antriebstrangs die Schaltung ausgeführt wird.

2. Verfahren nach Anspruch 1, **dadurch gekennzeichnet, dass** die bei Ausführung der Schaltung abzufangende Belastung abhängig von der Belastung durch den aktivierten bzw. eingelegten, getriebeseitigen, instationären Nebenabtrieb sowie abhängig von der Fahrsituation und/oder abhängig vom Fahrerwunsch ermittelt wird.

3. Verfahren nach Anspruch 1 oder 2, **dadurch gekennzeichnet, dass** dann, wenn die bei Ausführung der Schaltung abzufangende Belastung von einer Getriebebremse des automatisierten Schaltgetriebes abfangen werden kann, als Synchronelement zur Ausführung der Schaltung zumindest die Getriebebremse verwendet wird.

4. Verfahren nach einem der Ansprüche 1 bis 3, **dadurch gekennzeichnet, dass** dann, wenn die bei Ausführung der Schaltung abzufangende Belastung von einer Getriebebremse des automatisierten Schaltgetriebes nicht abfangen werden kann, als Synchronelement zur Ausführung der Schaltung zumindest das Antriebsaggregat und gegebenenfalls die Trennkupplung verwendet wird.

5. Verfahren nach Anspruch 4, **dadurch gekennzeichnet, dass** dann, wenn das Antriebsaggregat als Verbrennungsmotor ausgebildet ist, der über die Trennkupplung an die Eingangswelle des automatisierten Schaltgetriebes gekoppelt ist, die Ausführung der Schaltung unter Verwendung des Verbrennungsmotors und der Trennkupplung derart erfolgt, dass zunächst das automatisierte Schaltgetriebe in eine Neutralposition überführt und die Trennkupplung geöffnet wird, und dass anschließend in Neutralposition des Getriebes der Verbrennungsmotor auf eine Zieldrehzahl eines Zielgangs der Schaltung gebracht und hierbei gleichzeitig über ein schlupfendes Schließen der Trennkupplung der Synchronlauf des Zielgangs im automatisierten Schaltgetriebe hergestellt wird.

6. Verfahren nach Anspruch 4, **dadurch gekennzeichnet, dass** dann, wenn das Antriebsaggregat als Verbrennungsmotor ausgebildet ist, der über die Trennkupplung an die Eingangswelle des automatisierten Schaltgetriebes gekoppelt ist, die Ausführung der Schaltung unter Verwendung des Verbrennungsmotors und der Trennkupplung derart erfolgt, dass zunächst das automatisierte Schaltgetriebe in eine Neutralposition überführt und die Trennkupplung geöffnet wird, dass anschließend in Neutralposition des Getriebes und bei geöffneter Trennkupplung der Verbrennungsmotor auf die aktuelle Drehzahl der Eingangswelle gebracht wird, dass darauffolgend die Trennkupplung schlupffrei geschlossen wird, und dass anschließend der Verbrennungsmotor auf eine Zieldrehzahl eines Zielgangs der Schaltung für den Synchronlauf des Zielgangs im automatisierten Schaltgetriebe gebracht wird.

7. Verfahren nach Anspruch 4, **dadurch gekennzeichnet, dass** dann, wenn das Antriebsaggregat als Hybridantrieb ausgebildet ist, dessen Verbrennungsmotor über die Trennkupplung an die Eingangswelle des automatisierten Schaltgetriebes gekoppelt und dessen elektrische Maschine antriebstechnisch der Trennkupplung nachgeschaltet ist, die Ausführung der Schaltung unter Verwendung der elektrischen Maschine derart erfolgt, dass zunächst das automatisierte Schaltgetriebe in eine Neutralposition überführt und die Trennkupplung geöffnet wird, und dass anschließend in Neutralposition des Getriebes und bei geöffneter Trennkupplung die elektrische Maschine auf eine Zieldrehzahl eines Zielgangs der Schaltung für den Synchronlauf des Zielgangs im automatisierten Schaltgetriebe gebracht wird.

8. Verfahren nach einem der Ansprüche 1 bis 7, **dadurch gekennzeichnet, dass** dann, wenn die bei Ausführung der Schaltung abzufangende Belastung weder von einer Getriebebremse des automatisierten Schaltgetriebes noch vom Antriebsaggregat und gegebenenfalls der Trennkupplung abfangen werden kann, die Ausführung der Schaltung nicht zugelassen wird.

9. Verfahren nach einem der Ansprüche 1 bis 8, **dadurch gekennzeichnet, dass** Schaltungen des automatisierten Schaltgetriebes bei aktiviertem bzw. eingelegtem, getriebeseitigen, instationären Nebenabtrieb nur dann zugelassen werden, wenn die Neigung einer Fahrbahn des Kraftfahrzeugs kleiner als ein applizierbarer Grenzwert ist.

## Claims

1. Method for operating a drive train of a motor vehicle, wherein the drive train has an automated transmission which is arranged between a drive unit and an axial drive, wherein an input shaft of the automated transmission is connected via a controllable clutch to the drive unit and to an output shaft of the automated transmission with the axial drive, and wherein the drive train also comprises a transmission-side, non-steady-state secondary output which can be coupled to a transmission-side connecting point for the purpose of activation or engagement and can be decoupled therefrom for the purpose of deactivation or disengagement, wherein in order to carry out a shifting operation in the automated transmission when the transmission-side, non-steady-state secondary output is activated or engaged a load which is to be taken up when the shifting operation is carried out is detected, **characterized in that** as a function of the detected load it is determined whether the shifting operation is to be carried out and using which synchronizing element of the drive train.

2. Method according to Claim 1, **characterized in that** the load which is to be taken up when the shifting operation is carried out is determined as a function of the load by the activated or engaged, transmission-side, non-steady-state secondary output and as a function of the driving situation and/or as a function of the driver's request.

3. Method according to Claim 1 or 2, **characterized in that** when the load of a gear brake of the automated transmission which is to be taken up when the shifting operation is carried out can be taken up, at least the gear brake is used as a synchronizing element for carrying out the shifting operation.

4. Method according to one of Claims 1 to 3, **characterized in that** when the load of a gear brake of the automated transmission which is to be taken up when the shifting operation is carried out cannot be taken up, at least the drive unit and, under certain circumstances, the clutch are used as a synchronizing element for carrying out the shifting operation.

5. Method according to Claim 4, **characterized in that** when the drive unit is embodied as an internal combustion engine which is coupled to the input shaft of the automated transmission via the clutch, the shifting operation is carried out using the internal combustion engine and the clutch in such a way that firstly the automated transmission is moved into a neutral position and the clutch is opened, and **in that** subsequently in the neutral position of the transmission the internal combustion engine is adjusted to a target rotational speed of a target gear speed of the shifting operation and in the process at the same time the synchronous running of the target gear speed in the automated transmission is brought about by closing the clutch in a slipping fashion.

6. Method according to Claim 4, **characterized in that** when the drive unit is embodied as an internal combustion engine which is coupled to the input shaft of the automated transmission via the clutch, the shifting operation is carried out using the internal combustion engine and the clutch in such a way that firstly the automated transmission is moved into a neutral position and the clutch is opened, and **in that** subsequently in the neutral position of the transmission and when the clutch is opened the internal combustion engine is adjusted to the actual rotational speed of the input shaft, **in that** the clutch is then closed without slip, and **in that** subsequently the internal combustion engine is adjusted to a target rotational speed of a target gear speed of the shifting operation for the synchronous running of the target gear speed in the automated transmission.

7. Method according to Claim 4, **characterized in that** when the drive unit is embodied as a hybrid drive whose internal combustion engine is coupled via the clutch to the input shaft of the automated transmission and whose electric machine is connected downstream of the clutch in terms of drive technology, the shifting operation is carried out using the electric machine in such a way that firstly the automated transmission is moved into a neutral position and the clutch is opened, and **in that** subsequently in the neutral position of the transmission and when the clutch is opened the electric machine is adjusted to a target rotational speed of a target gear speed of the shifting operation for the synchronous running of the target gear speed in the automated transmission.

8. Method according to one of Claims 1 to 7, **characterized in that** the when the load which is to be taken up when the shifting operation is carried out cannot be taken up by a gear brake of the automated transmission or by the drive unit or, in certain circumstances, by the clutch, it is not permitted to carry out the shifting operation.

9. Method according to one of Claims 1 to 8, **characterized in that** shifting operations of the automated transmission when the transmission-side, non-steady-state secondary output is activated or engaged are permitted only when the inclination of a carriageway on which the motor vehicle is located is less than an applicable limiting value.

## Revendications

1. Procédé pour faire fonctionner une chaîne cinématique d'un véhicule automobile, la chaîne cinématique comportant une boîte de vitesses automatisée disposée entre un groupe d'entraînement en entrée et un entraînement en entrée d'essieu, un arbre d'entrée de la boîte de vitesses automatisée étant relié au groupe d'entraînement en entrée et un arbre de sortie de la boîte de vitesses automatisée étant relié à l'entraînement en entrée d'essieu par le biais d'un embrayage de coupure commandable et la chaîne cinématique comprenant en outre un entraînement en sortie secondaire non stationnaire placé côté transmission pouvant être couplé à un point de rattachement situé côté transmission pour réaliser l'activation et/ou le passage d'une vitesse et pouvant être découplé par rapport à lui pour réaliser la désactivation et/ou le retrait d'une vitesse, une sollicitation exécutée lors du changement de vitesse à intercepter étant calculée pour l'exécution d'un changement de vitesse dans la boîte de vitesses automatisée en présence d'un entraînement en sortie secondaire non stationnaire placé côté transmission activé et/ou passé, **caractérisé en ce qu'**en fonction de la sollicitation calculée, on détermine si le changement de vitesse est réalisé et si c'est le cas, avec l'utilisation de quels éléments synchrones de la chaîne cinématique il est réalisé.

2. Procédé selon la revendication 1, **caractérisé en ce que** la sollicitation à intercepter en cas d'exécution du changement de vitesse en fonction de la sollicitation est calculée par l'entraînement en sortie secondaire non stationnaire placé côté transmission activé et/ou passé ainsi qu'en fonction de la situation de conduite et/ou en fonction du souhait du conducteur.

3. Procédé selon la revendication 1 ou 2, **caractérisé en ce que** dès lors que la sollicitation à intercepter en cas d'exécution du changement de vitesse peut être interceptée par un frein de boîte de vitesses de la boîte de vitesses automatisée, l'élément synchrone utilisé pour l'exécution du changement de vitesse est au moins le frein de boîte de vitesses.

4. Procédé selon l'une quelconque des revendications 1 à 3, **caractérisé en ce que** dès lors que la sollicitation à intercepter en cas d'exécution du changement de vitesse ne peut pas être interceptée par un frein de boîte de vitesses de la boîte de vitesses automatisée, l'élément synchrone utilisé pour l'exécution du changement de vitesse est au moins le groupe d'entraînement en entrée et le cas échéant l'embrayage de coupure.

5. Procédé selon la revendication 4, **caractérisé en ce que** dès lors que le groupe d'entraînement en entrée prend la forme d'un moteur à combustion interne couplé à l'arbre d'entrée de la boîte de vitesses automatisée via l'embrayage de coupure, l'exécution du changement de vitesse se produit en utilisant le moteur à combustion interne et l'embrayage de coupure de telle sorte que la boîte de vitesses automatisée est d'abord transférée dans une position neutre et l'embrayage de coupure ouvert et que le moteur à combustion interne est ensuite amené à une vitesse de rotation cible d'un rapport cible du changement de vitesse dans la position neutre de la boîte de vitesses et que la trajectoire synchrone du rapport cible est simultanément établie dans la boîte de vitesses automatisée via la fermeture avec patinage de l'embrayage de coupure.

6. Procédé selon la revendication 4, **caractérisé en ce que** dès lors que le groupe d'entraînement en entrée prend la forme d'un moteur à combustion interne couplé à l'arbre d'entrée de la boîte de vitesses automatisée via l'embrayage de coupure, l'exécution du changement de vitesse se produit en utilisant le moteur à combustion interne et l'embrayage de coupure de telle sorte que la boîte de vitesses automatisée est d'abord transférée dans une position neutre et l'embrayage de coupure ouvert, qu'ensuite, dans la position neutre de la boîte de vitesses et en présence d'un embrayage de coupure ouvert, le moteur à combustion interne est amené à la vitesse de rotation actuelle de l'arbre d'entrée, qu'ensuite, l'embrayage de coupure est fermé sans patinage et que pour finir, le moteur à combustion interne est amené à une vitesse de rotation cible d'un rapport cible du changement de vitesse pour la trajectoire synchrone du rapport cible dans la boîte de vitesses automatisée.

7. Procédé selon la revendication 4, **caractérisé en ce que** dès lors que le groupe d'entraînement en entrée prend la forme d'un entraînement en entrée hybride dont le moteur à combustion interne est couplé à l'arbre d'entrée de la boîte de vitesses automatisée via l'embrayage de coupure et dont la machine électrique est connectée en aval sur le plan technique de l'entraînement en entrée de l'embrayage de coupure, l'exécution du changement de vitesse se produit en utilisant la machine électrique de telle sorte que la boîte de vitesses automatisée est d'abord transférée dans une position neutre et l'embrayage de coupure ouvert et qu'ensuite, dans la position neutre de la boîte de vitesses et en présence d'un embrayage de coupure ouvert, la machine électrique est amenée à une vitesse de rotation cible d'un rapport cible du changement de vitesse pour la trajectoire synchrone du rapport cible dans la boîte de vitesses automatisée.

8. Procédé selon l'une quelconque des revendications 1 à 7, **caractérisé en ce que** dès lors que la sollicitation à intercepter en cas d'exécution du changement de vitesse ne peut être interceptée ni par le frein de boîte de vitesses de la boîte de vitesses automatisée ni par le groupe d'entraînement en entrée et le cas échéant l'embrayage de coupure, l'exécution du changement de vitesse n'est pas autorisée.

9. Procédé selon l'une quelconque des revendications 1 à 8, **caractérisé en ce que** les changements de vitesse de la boîte de vitesses automatisée ne sont autorisés en présence d'un entraînement en sortie secondaire non stationnaire placé côté transmission activé et/ou passé que lorsque l'inclinaison d'une trajectoire de conduite du véhicule automobile est inférieure à une valeur limite applicable.
